# EUROPEAN PATENT APPLICATION

(11) **EP 1 410 896 A2**
(43) Date of publication of application: **21.04.2004**
(21) Application number: 03388051.9
(22) Date of filing: 11.07.2003
(51) Int. Cl.: B29C 55/24, B29C 49/44

(54) **A method for dimensional change of a part of a flexible pipe, and an arrangement for use in the dimensional change**

(30) Priority: 15.07.2002 DK 200201105
(71) Applicant: BelmaFlex A/S, DK-9640 Farso (DK)
(72) Inventor: Jensen, Bo, 9670 Logstor (DK)
(74) Representative: Larsen, Hans Ole

(57) **Abstract**

In a method and an arrangement for radial dimensional change of a part of a flexible pipe (1), e.g. a pipe made of high density polyethylene, the pipe is heated in a heating tunnel, following which it is pressurized and finally cooled.

The pressure is provided in an arrangement formed by inner (11) and outer (10) pipes e.g. of metal, and a pipe system (15, 17, 18) for the supply of a fluid is connected with the inner side of the inner pipe.

The flexible pipe (1) is introduced between the outer (11) and inner (10) pipes, and a bellows (9) terminated by rigid rings (7, 8) is arranged between the inner side of the flexible pipe and the outer side of the inner pipe. Sealing rings (12, 13) are arranged between the rigid rings and the inner side of the outer pipe (11).

The pressure is provided by means of a medium, such as water, which is fed through the pipe system to the inner side of the bellows (9), which exerts a pressure on the inner side of the flexible pipe (1), thereby providing a larger diameter of this pipe in the section of the pipe between the sealing rings (12, 13).

The method and the arrangement save energy, and the use of undesirable chemical substances is avoided.

## Description

The invention relates to a method for radial dimensional change of a part of a flexible pipe.

The invention moreover relates to an arrangement for use in radial dimensional change of a part of a flexible pipe.

Flexible pipe, e.g. pipes for the transport of heat, are laid in the ground in a branched network, where the pipes are coupled together and branched from each other at several locations by means of fittings, such as ball valves which are incorporated in the coupling points. Since, usually, these fittings have larger dimensions than the diameters of the pipes, it is necessary to manufacture the pipes with sections which have a larger radial extent than the pipe itself.

This radial expansion has previously been made by means of a process in which an end section of a pipe has been immersed into a bath of glycerine at a temperature of about 140 °C, following which the end has been inserted over a mandrel which has dimensions corresponding to the desired expansion. When the temperature of the pipe has dropped by means of cooling during the stay on the mandrel, a permanent dimensional change is provided.

Since the process requires that an end section of the pipe is immersed into a bath of glycerine, it is necessary in the manufacture of a pipe with a radial dimensional expansion disposed between the ends of the pipe to manufacture two separate end sections which are then welded together.

If, additionally, a hole is to be drilled in the expanded section of the pipe, no welds may be made at the location where the hole is formed, which means that a weld must be provided at each side of the hole in order to connect the two end sections, In practice, an intermediate member will thus be welded.

Finally, it is noted that the known process has limitations with respect to how thin thicknesses of the pipe can be worked, since too thin thicknesses mean that the pipe curls when it is applied to the mandrel, which is particularly pronounced when working with long mandrels.

Since the above-mentioned process is quite time-consuming, energy-consuming and is performed with process steps including chemicals that require much care in terms of safety and also have certain limitations with respect to the working of pipes of small thicknesses, it is an object of the invention to provide a process which is faster, requires less energy and is less harmful to the environment than seen before.

GB 1 432 539 discloses a method for radial dimensional change of a flexible pipe, where the flexible pipe is inserted into a mould, following which the flexible pipe is heated by the supply of circulating hot water between the inner side of the mould and the outer side of the flexible pipe. After heating of the outer side of the flexible pipe, the hot water is fed to the inner side of the flexible pipe under pressure, such that the flexible pipe is expanded. This known method requires large amounts of energy and a rather large pressure fluid.

Accordingly, an object of the invention is to provide a method using less energy and more limited pressure conditions.

The object of the invention is achieved by a method of the type defined in the introductory portion of claim 1, which is characterized by the following steps of:
- heating the pipe to a given temperature,
- inserting the pipe into a pressure container in which a flexible bellows is arranged,
- pressurizing the inner side of the flexible bellows, and
- cooling the pipe.

Hereby, a pipe having radial dimensional changes may be produced, said process being less time-consuming, requiring fewer process steps and being less harmful to the environment.

With a view to performing the process as a continuous process, it is an advantage if, as stated in claim 2, the heating is performed in a heating tunnel, since, then, heated pipes ready for the subsequent working will currently be provided.

Expedient selections of pressure and temperature included in the method are 3 - 8 bars, as stated in claim 3, and about 140 °C, as stated in claim 4.

With a view to having a more uniform radial dimensional change of the pipe, it is an advantage if, as stated in claim 5, the inner diameter of the pressure container is selected to have a size which corresponds to the dimensional change, since then the applied pressure need not be completely accurate, but merely sufficient, as the dimensional change will not be larger than the inner diameter of the container.

With a view to ensuring that the pipe is expanded only in a radial direction, it is an advantage if, as stated in claim 6, the section of the pressure container in which the bellows is arranged, is sealed to provide a space between the inner wall of the pressure container and the tightening bands.

Other expedient embodiments of the invention are defined in claims 7 and 8.

As mentioned, the invention also relates to an arrangement.

This arrangement is characterized in that the arrangement is formed by inner and outer pipes e.g. of metal, and that a pipe system is connected with the inner side of the inner pipe for providing a fluid, and that a flexible bellows terminated at the ends by rigid rings is arranged between the outer and inner pipes, and that sealing rings are provided between the outer pipe and the rigid rings.

In this arrangement, the flexible pipe may be expanded using a limited amount of fluid, since pressure is applied only between the inner pipe and the bellows.

When, as stated in claim 10, the surfaces of the sealing rings facing toward the pipe system have a geometrical shape which corresponds to the geometry of the ends of the expanded part of the flexible pipe, it is easy to adapt the ends of the geometry of the flexible pipe to a given use.

The invention will now be explained with reference to the drawing, in which
- fig. 1: shops a flexible pipe section made according to the invention,
- fig. 2: shows a rubber bellows for use in the method according to the invention, while
- fig. 3: schematically shows the pipe and the rubber bellows according to the invention disposed in an arrangement for use in the working of the invention.

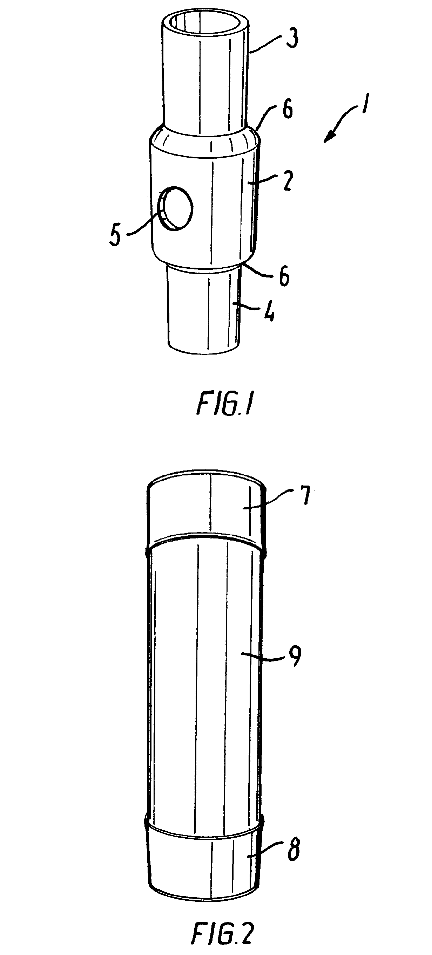

In fig. 1, the numeral 1 generally designates a pipe section which, as will be seen in the figure, consists of three subpipe sections, where two of the subpipe sections are end pipe sections which are designated 3 and 4 and are joined with a central pipe section 2.

As will be seen, the central subpipe section 2 has a diameter which is larger than the diameter of the two end pipe sections 3, 4.

The two end pipe sections 3, 4 and the central subpipe section 2 are connected with their respective transition members 6, which, as will be seen, have a rounded shape.

Finally, fig. 1 shows that the central pipe section 2 is formed with a hole 5.

A pipe section as shown in fig. 1 may e.g. be used in connection with the laying of district heating pipes, where fittings, such as a ball valve, a branch connection or the like, are arranged in the central pipe section 2.

The manufacture of a pipe section as shown in fig. 1 is performed in the following manner:

A pipe, e.g. made of PEHD, having a diameter corresponding to the diameter of the two end pipe sections 3 and 4 is subjected to heating, where the pipe is introduced into a heating tunnel at a temperature of about 140 °C for about 20 - 30 min., which, however, depends on the thickness of the pipe.

After the heating process the pipe has become deformable, and a rubber bellows is introduced into it, said rubber bellows being designated 9 as shown in fig. 2. This rubber bellows is capable of expanding in a radial direction by the supply of pressure to its interior. Finally, the pipe is fed for cooling in a cooling cylinder for about 10 min at a temperature of about 8 °C. These cooling parameters, however, also depend on the thickness of the pipe.

As will be seen in fig. 2, rigid rings 7 and 8 are arranged at the ends of the bellows, which are disposed at a distance from each other which, as will be explained below, corresponds to the length of the pipe section which is to be expanded radially, e.g. like the length of the central pipe section 2 and the transition members 6 in fig. 1.

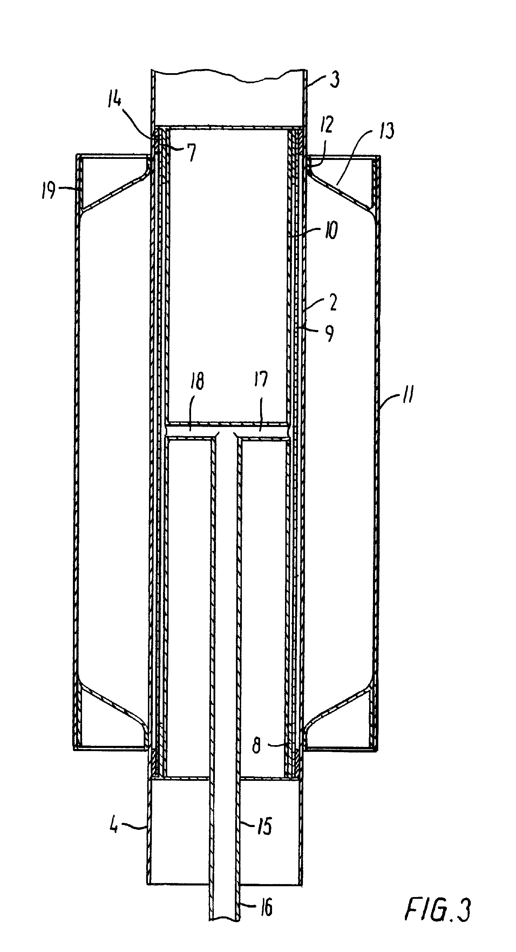

It will now be explained more fully how the above processes are carried out in an arrangement in connection with fig. 3.

The arrangement consists of an outer pipe 11 and an inner pipe 10 which are made of a hard material, such as metal. A pipe system is connected with the inner pipe 10, consisting of three pipes 15, 17, 18 which, via the one pipe 15, are intended to transfer a pressure fluid in the form of water at the connection of the one pipe shown at 16. The inner pipe 10 and the outer pipe 11 have interposed between them the flexible bellows 9 with the rigid rings 7 and 8. Sealing rings 12, 13 are arranged in the area between the rigid rings 7, 8 and the inner side of the outer pipe 11, said sealing rings being sealed to the outer side of the rigid rings 7, 8 and to the inner side of the outer pipe 11, as schematically shown at 14 and 19. These sealing rings 12, 13 have a geometrical shape on their inner side which corresponds to the outer shape of the transition members 6.

The arrangement works in the following manner:

When water pressure is applied to the pipe system 15, 17, 18 to the area between the outer side of the inner pipe 10 and the bellows 9, the flexible pipe is pressed out towards the inner side of the outer pipe 11 and the inner side of the sealing rings 12, 13, following which the shape of the flexible pipe, e.g. as shown in fig. 1, is provided.

It is noted that the volume of the area where the pressure is applied is very limited, since the bellows is arranged close to the flexible pipe, whose dimensions are to be changed, and the outer side of the inner pipe, as will be seen clearly in fig. 3.

After the process in the arrangement has been completed, the flexible pipe is removed from the arrangement and is cooled.

It is noted that in the method according to the invention it is also possible to manufacture other pipe geometries than the one shown in fig. 1. Examples of this might be pipe sections having several expanded sections and end terminations having other geometrical configurations.

## Claims

1. A method for radial dimensional change of a part of a flexible pipe, **characterized by** the following steps of:
- heating the pipe to a given temperature,
- introducing the pipe into a pressure container in which a flexible bellows is arranged,
- pressurizing the inner side of the flexible bellows, and
- cooling the pipe.

2. A method according to claim 1, **characterized in that** the heating is performed in a heating tunnel.

3. A method according to claim 1 or 2, **characterized in that** the pressure is provided by water and has a size of 3 - 8 bars.

4. A method according to claims 1 - 3, **characterized in that** the temperature is adjusted to about 140 °C.

5. A method according to claims 1-4, **characterized in that** the inner diameter of the pressure container is selected to have a size which corresponds to the dimensional change.

6. A method according to claim 5, **characterized in that** the section of the pressure container in which the bellows is disposed, is sealed to provide a space between the inner wall of the pressure container and the tightening bands.

7. A method according to claims 1-6, **characterized in that** the part of the flexible pipe constitutes a section between the ends of the pipe.

8. A method according to claims 1-7, **characterized in that** the flexible pipe is made of PEHD.

9. An arrangement for use in radial dimensional change of a part of a flexible pipe (1), **characterized in that** the arrangement is formed by inner (11) and outer (10) pipes e.g. of metal, and that a pipe system is connected with the inner side of the inner pipe for providing a fluid, and that a flexible bellows terminated at the ends with rigid rings (7) is arranged between the outer and inner pipes, and that sealing rings (12, 13) are arranged between the outer pipe (11) and the rigid rings (7).

10. An arrangement according to claim 9, **characterized in that** the surfaces of the sealing rings facing toward the pipe system have a geometrical shape which corresponds to the geometry of the ends of the expanded part of the flexible pipe.
